**Europäisches Patentamt**

**European Patent Office**

**Office européen des brevets**

(11) Veröffentlichungsnummer: **0 310 144 B1**

# EUROPÄISCHE PATENTSCHRIFT

(45) Veröffentlichungstag der Patentschrift: **30.09.92**

(51) Int. Cl.5: **B60R 22/42**

(21) Anmeldenummer: **88118648.0**

(22) Anmeldetag: **18.12.85**

(60) Veröffentlichungsnummer der früheren Anmeldung nach Art. 76 EPÜ: **0 185 367**

(54) **Klemmvorrichtung für ein Sicherheitsgurtsystem.**

(30) Priorität: **21.12.84 DE 3446857**
**12.12.85 DE 3543959**

(43) Veröffentlichungstag der Anmeldung:
**05.04.89 Patentblatt 89/14**

(45) Bekanntmachung des Hinweises auf die Patenterteilung:
**30.09.92 Patentblatt 92/40**

(84) Benannte Vertragsstaaten:
**DE FR GB IT**

(56) Entgegenhaltungen:
**WO-A-85/03676**
**DE-A- 2 259 692**
**DE-A- 3 421 837**
**US-A- 3 814 346**

(73) Patentinhaber: **Autoliv-Kolb GmbH & Co.**
**Theodor-Heuss-Strasse 2**
**W-8060 Dachau(DE)**

(72) Erfinder: **Ernst, Hans-Hellmut, Dipl.-Ing.**
**Eschenweg 4**
**W-2061 Sülfeld(DE)**
Erfinder: **Lochbihler, Edmung, Dipl.-Ing.**
**Theodor-Lipps-Strasse 15**
**W-8000 München 50(DE)**

(74) Vertreter: **Görg, Klaus, Dipl.-Ing. et al**
**Hoffmann, Eitle & Partner Arabellastrasse 4**
**(Sternhaus)**
**W-8000 München 81(DE)**

## Beschreibung

Die Erfindung bezieht sich auf eine Klemmvorrichtung für ein Sicherheitsgurtsystem mit einem Klemmteil, das auf einer ebenen Grundfläche mit einzelnen Greifzähnen zum Erfassen des Gurtbandes versehen ist.

Klemmvorrichtungen für Sicherheitsgurtsysteme sind in unterschiedlicher Version bekannt. Aus der GB-A-2 085 709 ist eine Klemmvorrichtung mit einem Klemmteil bekannt, welches mit Zähnen versehen ist. Diese Zähne sind in der Zeichnung dargestellt, jedoch ohne näher auszuführen, wie diese Zähne ausgestaltet sein sollen. Ähnliches gilt für die US-A-3814346. Hier ist nur ausgeführt, daß die Einzelzähne konisch ausgebildet sind und in das Gurtgewebe schonend eindringen sollen.

Im Zusammenhang mit einer derartigen Klemmvorrichtung ist es Aufgabe der Erfindung, das Klemmteil dahingehend weiterzuentwickeln, daß bei verbessert schonungsvollem Eingriff eine verbesserte Klemmwirkung erzielt werden kann.

Diese Aufgabe wird erfindungsgemäß dadurch gelöst, daß die Greifzähne als spitze Zähne ausgebildet sind und daß die in Gurtbandlaufrichtung gesehene hintere Flanke der Zähne mit einer Ebene parallel zur Gurtband fläche einen kleineren Winkel bildet als die vordere Flanke, so daß die in Abzugsrichtung des Gurtes gesehene hintere Flanke kürzer ist als die vordere Flanke.

Von wesentlicher Bedeutung ist, daß einzelne spitze Zähne vorgesehen sind, die in das Gewebe des Gurtbandes eindringen können, ohne das Gurtband im wesentlichen hinsichtlich seiner Form zu verändern und somit anzugreifen.

Durch die Merkmale des kennzeichnenden Teils des Anspruchs 1 drückt sich aus, daß die Spitzen der Greifzähne entgegen der Abzugsrichtung des Sicherheitsgurtbandes auf die Gurtbandfläche zugerichtet sind.

Das bewegliche Klemmteil ist auf seiner Klemmfläche mit einer Vielzahl von Greifzähnen versehen. Dabei kann das Klemmteil aus einem kraftaufnehmenden Körper und einer vorgelagerten, die Greifzähne tragenden Platte bestehen. Dadurch besteht die Möglichkeit, die Greiffläche materialmäßig an die jeweiligen Verhältnisse anzupassen, insbesondere hinsichtlich der Ausbildung der Greifzähne, beispielsweise wenn diese die Greifzähne tragende Platte als Spritzgußteil aus einem entsprechenden Kunststoffmaterial hergestellt wird. Das Klemmteil selbst kann dann aus einem solchen Material hergestellt sein, welches den entsprechenden eingeleiteten Kräften standhält.

Die Spitzen der Greifzähne sind entgegen der Abzugsrichtung auf die Gurtbandfläche zu gerichtet, so daß ein besonders wirksames Greifen der Greifzähne gewährleistet ist. Es ist von Vorteil für die Wirksamkeit des Greifvorganges bzw. des Mitnahmevorganges, wenn die Hinterschneidungsfläche der Greifzähne mit der Normalen auf die Gurtbandfläche einen besonderen Winkel einschließt. Dieser Winkel soll vorzugsweise 3 bis 10° betragen.

Auch die Höhe der Greifzähne ist von großer Bedeutung; wird sie auf 2/3 der Gurtbanddicke ausgelegt (= 0,8 mm Höhe bei Dicke des Gurtbandes von 1,2 mm), so wird noch gewährleistet, daß die Zähne unter Last (und komprimiertem Gurtband) nicht ganz durchdrücken und somit die Gegendruckfläche nicht berühren.

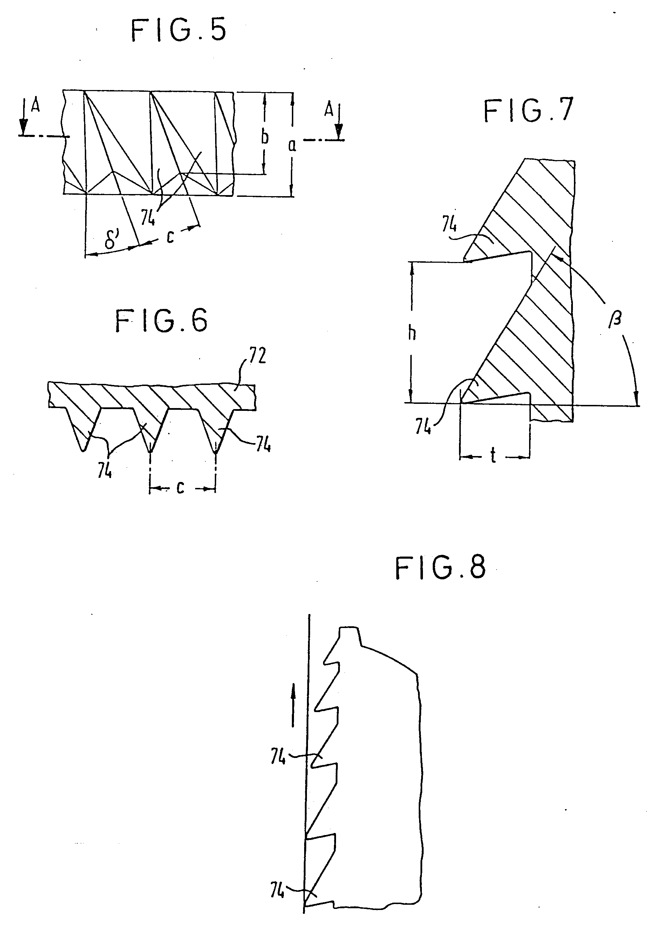

Die Greifzähne können zweckmäßigerweise eine asymmetrische Pyramidenform aufweisen und die Spitzen der Greifzähne in den Zahnreihen können versetzt hintereinander angeordnet sein, wobei der in Fig. 5 definierte Winkel δ' ca. 20° beträgt.

Insbesondere ist es von Vorteil, wenn die Ausbildung, Ausrichtung und Anordnung der Greifzähne an den jeweiligen strukturellen Aufbau des Gurtbandes angepaßt ist, insbesondere mit dem Abstand ihrer Zahnreihen an die Lage der Schuß- und Kettfäden des gewebten Gurtbandes. Insbesondere entspricht der Zahnreihenabstand dem Abstand der Schußfäden.

Um den Eingriff zwischen der mit den Zähnen versehenen Klemmfläche und dem Gurtband bei möglichst schonender Klemmung des Gurtbandes weiter zu erhöhen, sind die Greifzähne in einer Ebene parallel zur Gurtbandfläche in einem spitzen Winkel zur Gurtbandlaufrichtung ausgerichtet, vorzugsweise in einem Winkel von 20 Grad. Wenn im Zusammenhang damit senkrecht zur Gurtbandlaufrichtung in der Klemmflächenebene ein Freiraum vorgesehen ist, so führt dies zu einem Halbformschluß der Zähne mit den lastaufnehmenden Kettfäden, da sich die Kettfäden mäanderartig geschlängelt zwischen die Zähne setzen und in die Freiräume hineinquetschen können.

Wenn die Zahnhöhe der Greifzähne in Richtung entgegen der Abzugsrichtung des Gurtbandes zunimmt, wobei die ersten drei Reihen zunehmend kleiner sein können als die übrigen Zähne, wobei in der genannten Richtung die Greifzähne der ersten Reihe eine Höhe von 40%, die der zweiten Reihe eine von 50%, die der dritten Reihe eine von 60% und die der restlichen Reihen eine gleichbleibende Höhe von 2/3 der Gurtbanddicke haben können, so ergibt sich daraus eine höhere Belastungsfähigkeit beim Unfall an der Stelle des größeren Kraftangriffes. Hierzu kann die Breite der von den Greifzähnen besetzten Klemmfläche normal zur Gurtbandlaufrichtung in Gurtbandlängsrichtung abnehmend ausgebildet sein.

Das Klemmteil kann an den Rändern eine Materialdünnung aufweisen, damit sich das Klemmteil durch Abbiegen an dieser Stelle der letztlich nicht vermeidbaren Durchwölbung der Gegendruckwange anpaßt. Dadurch erfolgt eine gleichmäßigere Krafteinwirkung auf das Gurtband bei hoher Last, verbunden mit einer Kantenschonung, wobei keine Neigung zum Einrasten an dieser Stelle besteht.

Die Erfindung wird nachfolgend anhand der in den Zeichnungen rein schematischen Ausführungsbeispiele näher erläutert. Es zeigt:

Fig. 1    eine schematische Seitenansicht einer Klemmvorrichtung mit einem nur schematisch dargestellten Aufroll- und Sperrmechanismus,

Fig. 2    eine Draufsicht auf eine Reihe von Greifzähnen der Klemmfläche des beweglichen Klemmteils,

Fig. 3    eine Schnittansicht durch einen Greifzahn,

Fig. 4    eine Draufsicht auf einen Greifzahn,

Fig. 5    eine perspektivische Ansicht eines Greifzahnes mit einer anderen Ausrichtung,

Fig. 6    eine Teilschnittansicht durch die Zahnanordnung der Zähne gemäß Fig. 5a,

Fig. 7    eine Schnittzeichnung durch die Greifzähne in Gurtlaufrichtung,

Fig. 8    ebenfalls eine Schnittzeichnung durch die Greifzähne in Gurtlaufrichtung, jedoch mit einer anderen Zahnhöhenanordnung und

Fig. 9    eine perspektivische Ansicht der Klemmfläche des Klemmteils einer besonderen Zahnanordnung und

Fig 10    eine perspektivische Ansicht einer Klemmfläche des Klemmteils mit einer eingelegten Gummileiste.

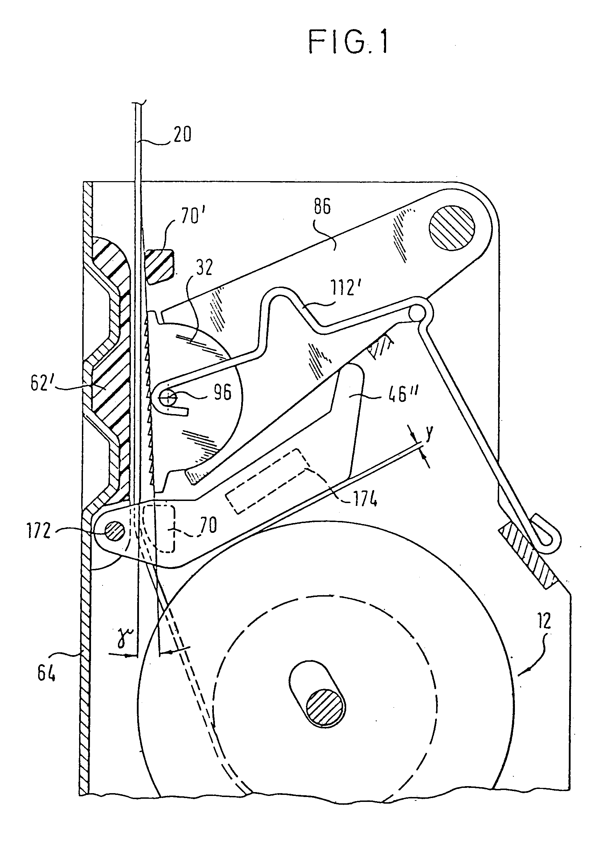

Die in Fig. 1 dargestellte Klemmvorrichtung besteht aus einem Schwenkhebel 86, der auf einer gehäusefesten Schwenkachse gelagert ist. Am der Schwenkachse entgegengesetzten Ende des Schwenkhebels 86 ist auf einer Drehachse 96 ein Klemmteil 32 drehbar gelagert, auf das eine Rückstellfeder 112′ einwirkt, um so das Klemmteil in einer bestimmten Ausgangslage zu halten Am Schwenkhebel 86 greift ein Betätigungshebel 46″ an, um das Klemmteil 32 in Anlage am Gurtband 20 zu bringen.

Dem Klemmteil 32 gegenüberliegend, aber auf der anderen Seite des Gurtbandes 20, befindet sich eine Gegendruckfläche 62′.

Das Klemmteil 32 ist an seiner Klemmfläche 72 mit einer Vielzahl von Greifzähnen 74 versehen.

Wie bereits ausgeführt wurde, soll die Bewegungsinduzierung auf den Schwenkhebel 86 so erfolgen, daß sich das Klemmteil 32 hinsichtlich der Bewegungskomponente in Zugrichtung des Gurtbandes bei der Annäherung an das Gurtband mit derselben Geschwindigkeit bewegt, wie das Gurtband. Durch diesen Synchronisierungseffekt kommt es zu keiner Relativbewegung zwischen der gezahnten Greiffläche des Klemmteils 32 und dem Gurtband, was einen sehr schonenden Eingriff mit dem Gurtband zufolge hat. Um in der Gestaltung des Übersetzungsverhältnisses für den Schwenkhebel zur Erzielung des Synchronisationseffektes variabler zu sein, ist das Betätigungselement für das Zusammenwirken mit dem Aufroll- und Sperrmechanismus 12 nicht einstückig mit dem Schwenkhebel 86 verbunden. Stattdessen sind hier gemäß Fig. 1 beispielsweise zwei Betätigungshebel 46″ gehäuseseitig im Lager 172 schwenkgelagert, wobei die Hebel durch eine gestrichelt dargestellte Stange 174 miteinander verbunden sind. Durch die Ausgestaltung dieses Betätigungshebels können die Hebelverhältnisse genau eingestellt werden. In der Grundstellung des Betätigungshebels verbleibt ein Spiel y von ca. 0,5 mm gegenüber dem Aufroll- und Sperrmechanismus, damit dieser sich im Normalbetrieb frei drehen kann. In Fig. 1 verdeutlicht der Winkel $\gamma$ den Voreinstellwinkel der Klemmfläche des Klemmteils 32 in der Ausgangslage so, daß beim Heranschwenken des Klemmteils an das Gurtband stets die gesamte Klemmfläche in Anlage an das Gurtband gelangt.

Von Bedeutung ist auch der Winkel des Schwenkhebels mit dem Klemmteil zur Laufrichtung des Gurtbandes. Um hier einen optimalen und gut wirksamen Selbstverstärkungseffekt zu erzielen, sollte der Winkel in einem Bereich von ca. 20 bis 40 Grad eingestellt sein. Es handelt sich dabei um den Winkel zwischen der Normalen durch die Schwenkachse des Schwenkhebels zum Gurtband und der Linie durch die Schwenkachse des Schwenkhebels und der Klemmfläche des Klemmteils. Ist der Winkel zu groß, so tritt kein Selbstverstärkungseffekt ein, und es ergibt sich ein Gurtschlupf. Eine sehr hohe Reibung in der Klemmteilfläche ist erforderlich, um überhaupt eine Klemmung zu erreichen, wenngleich auch keine Probleme bei der Deblockierung entstehen und geringere Druckkräfte entwickelt werden. Ist der Winkel dagegen zu klein, so ist zwar ein sehr guter Selbstverstärkungseffekt und kein Gurtbandschlupf gegeben. Auch ist keine hohe Reibung in der Klemmfläche erforderlich. Jedoch bestehen erhebliche Probleme bei der Deblockierung und es entwickeln sich sehr hohe Druckkräfte, so daß sich der Schwenkhebel, der als Druckhebel wirkt, festklemmt.

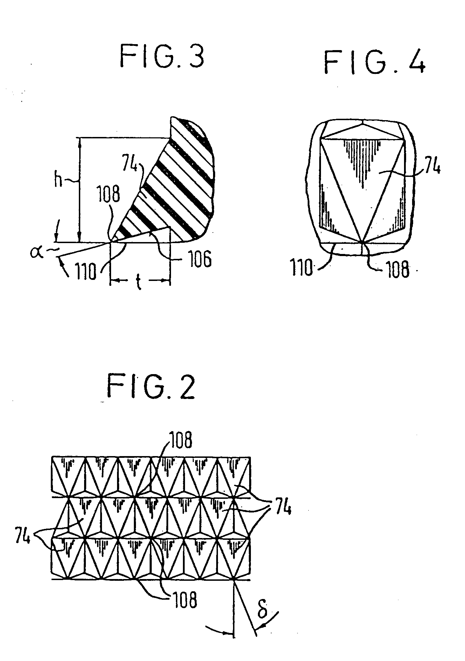

Die Ausbildung der Greifzähne ist für die Wirksamkeit eines schnellen und schonenden Klemmeingriffs mit dem Sicherheitsgurtband selbst von besonderer Bedeutung, und zwar sowohl hinsichtlich der Materialauswahl, als auch hinsichtlich der Dimensionierung und der Anordnung der Greifzähne. Entsprechend der Darstellung in Fig. 2 bis 4 sind die Greifzähne entgegen der Bewegungsrichtung des Sicherheitsgurtbandes gepfeilt, d.h. die Spitzen der Zähne sind entgegen der Gurtbandabzugsrichtung auf die Gurtbandfläche gerichtet. Dabei haben entsprechend der Darstellung in Fig. 3 und 2 diese Greifzähne eine asymmetrische Pyramidenform. Diese pyramidenförmigen Greifzähne sind in Übereinstimmung mit der Darstellung in Fig. 2 so angeordnet, daß die Zahnspitzen in den Zahnreihen versetzt übereinander angeordnet sind. Dies erfolgt insbesondere in der Anpassung an den besonderen Gewebeaufbau des Sicherheitsgurtbandes.

Die Dimensionierung der Greifzähne ist von besonderer Bedeutung. So hat es sich als vorteilhaft herausgestellt, wenn die Hinterschneidungsfläche 106 der Greifzähne 74 mit der Normalen 110 auf die Gurtbandfläche einen Winkel $\alpha$ von 3° bis l0° einnimmt. Die Tiefe t des Zahnes beträgt ca. 2/3 der Gurtbanddicke und die Zahnhöhe h entspricht dem Schußfadenabstand des gewebten Gurtbandes. Dadurch wird bewirkt, daß die Zähne auf besonders günstige Weise zwischen die Kett- und Schußfäden eingreifen und dabei das Gurtbandgewebe nur geringfügig belastet. Dadurch ist es möglich, daß ein häufiger Klemmeingriff erfolgen kann, ohne das Gurtband zu beschädigen.

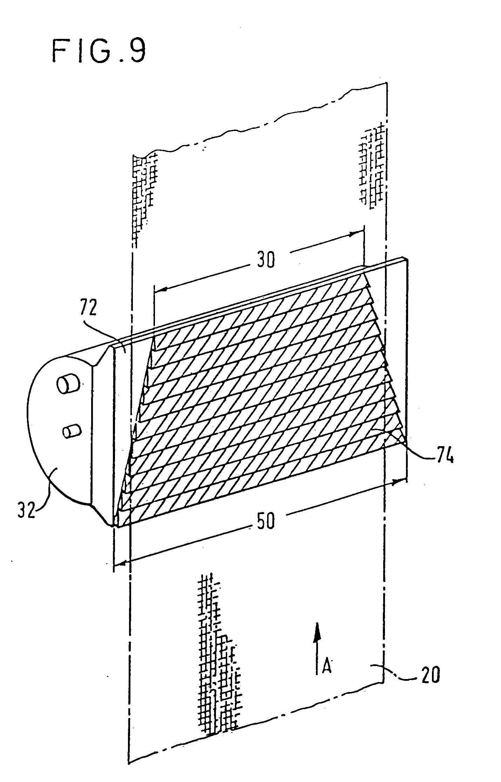

Da der Kraftangriff zwischen Klemmteil 32 und Klemmfläche 72 bzw. dem gezahnten Bereich 74 in Gurtabzugsrichtung A am auslaufseitigen Ende der Klemmfläche am größten und am Einlaufende am kleinsten ist, hat die Klemmfläche in der in Fig. 9 dargestellten Weise vorzugsweise eine in Gurtabzugsrichtung sich verjüngende Breite, wobei einlaufseitig die Breite vorzugsweise etwas größer ist als die Breite des Gurtbandes 20. Wenn beispielsweise das Gurtband eine Breite von 46 bis 48 mm hat, so soll die einlaufseitige Breite vorzugsweise 50 mm und die auslaufseitige Breite 30 mm betragen. Durch diese Ausgestaltung wird eine gleichmäßigere Beanspruchung des Gurtbandes und somit eine höhere Belastungsfähigkeit erreicht.

Vorzugsweise wird eine Anzahl von ca. 400 Greifzähnen für das Klemmteil verwendet. Die Klemmfläche hat dabei eine Ausdehnung von ca. 25 x 45 mm.

In Fig. 2 sind die Greifzähne entgegen der Gurtabzugsrichtung ausgerichtet und bei Draufsicht auf die Klemmflächenebene des Klemmteils 32 auf einer Linie parallel zur Gurtabzugsrichtung. Entsprechend der Darstellung in Fig. 5 sind die einzelnen Greifzähne 74 in einem spitzen Winkel $\delta'$ von ca. 20° Gurtbandlaufrichtung entgegen der Gurtabzugsrichtung ausgerichtet, wobei in Fig. 5 nur ein Zahn dargestellt ist. Gemäß der Darstellung in Fig. 6 befinden sich in Richtung normal zur Gurtbandlaufrichtung und in der Klemmflächenebene zwischen den Zähnen 74 Freiräume x. Im Zusammenhang mit der versetzten Anordnung der Zähne erlauben diese Freiräume einen Halbformschluß zwischen den Kettfäden des Gurtbandes und den Greifzähnen der Klemmfläche, indem sich die Kettfäden mäanderartig zwischen den Zähnen schlängeln und sich darin verrasten.

Beispielsweise haben die Zähne folgende Abmessungen. Die Abmessung a beträgt vorzugsweise in Abhängigkeit von der Gurtbandwebung ca. 1,7 mm, die Abmessung b ungefähr 1,5 mm und die Abmessung c ungefähr 0,6 bis 0,8 mm. Der Zahnabstand c in Fig. 6 beträgt ca. 1,5 mm, die Zahnhöhe h in Zugrichtung des Gurtbandes beträgt gemäß Fig. 7 ungefähr 1,7 mm. Der Winkel $\beta$ in Fig. 7 beträgt vorzugsweise 60° und die Zahnhöhe t normal zur Klemmfläche 0,8 mm, d.h. 2/3 der Gurtbanddicke. Die Spitzen sind vorzugsweise mit 0,1 mm Radius abgerundet. Der Zahnspitzenabstand in Zugrichtung des Gurtbandes hängt vom Abstand der Schußfäden im Gurtband ab, wobei die Kettfäden in Längsrichtung des Gurtbandes und die Schußfädsen normal dazu verlaufen. Bekannterweise sind die Kettfäden die kraftaufnehmenden Fäden des Gurtbandes.

Fig. 8 zeigt noch eine weitere abgewandelte Ausführungsform der Zahnanordnung hinsichtlich einer hohen Belastungsfähigkeit, und zwar in Abhängigkeit vom bereits erwähnten differenzierten Kraftangriff, gemäß dem die Zähne mit zunehmendem Kraftanteil in ihrer Höhe abnehmen. Aus Fig. 8 ist beispielsweise ersichtlich, daß die in Zugrichtung stromab liegenden Zähne entgegen der Gurtbandzugrichtung eine zunehmende Höhe haben, und zwar von 0,5 mm über 0,6 mm, 0,7 mm für die ersten drei Zahnreihen und 0,8 mm gleichbleibend für die restlichen Zahnreihen. Die angegebenen Werte entsprechen in der genannten Reihenfolge ca. 40%, 50%, 60% und 2/3 der Gurtbanddicke.

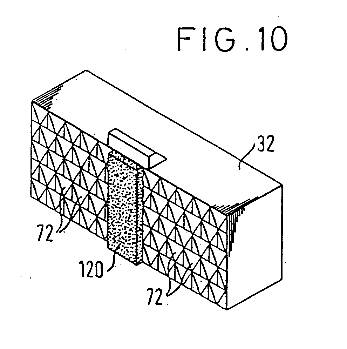

Aus Fig. 10 ist ersichtlich, daß in die Klemmfläche 72 des Klemmteiles 32 eine Leiste 120 aus Gummi o.dgl. Material eingelegt ist. Diese Gummileiste erstreckt sich in Gurtbandverlaufsrichtung über die gesamte Länge des Klemmteils 32, wie dies der Fig. 10 deutlich zu entnehmen ist.

## Patentansprüche

1. Klemmvorrichtung für ein Sicherheitsgurtsystem mit einem Klemmteil, das auf einer ebenen Grundfläche (72) mit einzelnen Greifzähnen (74) zum Erfassen des Gurtbandes (20) versehen ist, dadurch gekennzeichnet, daß die Greifzähne (74) als spitze Zähne ausgebildet sind und die in Gurtbandlaufrichtung gesehene hintere Flanke der Zähne mit einer Ebene parallel zur Gurtbandfläche einen kleineren Winkel bildet als die vordere Flanke, so daß die in Abzugsrichtung des Gurtes gesehene hintere Flanke kürzer ist als die vordere Flanke.

2. Klemmvorrichtung nach Anspruch 1, dadurch **gekennzeichnet,** daß eine in Abzugsrichtung des Gurtbandes hinten am Greifzahn liegende Hinterschneidungsfläche (106) mit der Normalen (110) auf die Gurtbandfläche einen Winkel $\alpha$ von 3° bis 10° einschließt.

3. Klemmvorrichtung nach Anspruch 1 oder 2, dadurch **gekennzeichnet,** daß die Zahnhöhe (h) 2/3 der Gurtbanddicke ist.

4. Klemmvorrichtung nach Anspruch 1, dadurch **gekennzeichnet,** daß die Greifzähne (74) eine asymmetrische Pyramidenform aufweisen und daß die Spitzen (108) der Greifzähne in Zahnreihen versetzt hintereinander angeordnet sind, wobei der in Fig. 2 definierte Winkel $\delta$ ca. 20° beträgt.

5. Klemmvorrichtung nach einem der Ansprüche 1 bis 4, dadurch **gekennzeichnet,** daß die Greifzähne (74) derart in Anpassung an den Strukturaufbau des Sicherheitsgurtbandes (20) gebildet sind, daß der Zahnreihenabstand dem Abstand der Schußfäden in der Gurtbandwebung entspricht.

## Claims

1. A clamping device for a safety belt system with a clamping member which is provided on a flat base surface (72) with individual gripping teeth (74) to grip the belt strap (20), characterised in that the gripping teeth (74) are in the form of pointed teeth and the rear flank of the teeth as seen in the direction of advance of the belt strap forms a smaller angle than the front flank with a plane parallel to the surface of the belt strap, so that the rear flank as seen in the direction in which the belt is pulled is shorter than the front flank.

2. A clamping device as claimed in claim 1, characterised in that an undercut surface (106) situated on the rear of the gripping tooth as seen in the direction in which the belt strap is pulled encloses an angle $\alpha$ of 3° to 10° with the perpendicular (110) to the surface of the belt strap.

3. A clamping device as claimed in claim 1 or 2, characterised in that the tooth height (h) is 2/3 of the thickness of the belt strap.

4. A clamping device as claimed in claim 1, characterised in that the gripping teeth (74) have an asymmetrical pyramid shape, and the points (108) of the gripping teeth are arranged in tooth rows offset one behind the other, the angle $\delta$ defined in Fig. 2 being approximately 20°.

5. A clamping device as claimed in any of claims 1 to 4, characterised in that the gripping teeth (74) are so adapted to the structure of the safety belt strap (20) that the tooth row pitch corresponds to the pitch of the wefts in the belt strap weave.

## Revendications

1. Dispositif de serrage pour un système de ceinture de sécurité, comportant une partie de serrage, pourvue, sur une surface de base (72) plane, d'une pluralité de dents de prise (74), en vue de saisir la bande de ceinture (20), caractérisé en ce que les dents de prise (74) sont réalisées sous forme de dents pointues et le flanc, se trouvant à l'arrière en observant dans le sens de défilement de la bande, des dents formant avec un plan parallèle à la surface de la bande de ceinture un angle inférieur à l'angle formé avec le flanc avant, de sorte que le flanc qui se trouve à l'arrière, en observant dans le sens d'extraction de la ceinture, est plus court que le flanc avant.

2. Dispositif de serrage selon la revendication 1, caractérisé en ce qu'une surface de contre-dépouille (106), située à l'arrière de la dent de prise en observant dans le sens d'extraction de la bande de ceinture, fait avec la normale (110) à la surface de base de la ceinture un angle $\alpha$ compris entre 3° à 10°.

3. Dispositif de serrage selon la revendication 1 ou 2, caractérisé en ce que la hauteur de dent (h) est les 2/3 de l'épaisseur de la bande de ceinture.

4. Dispositif de serrage selon la revendication 1, caractérisé en ce que les dents de prise (74) présentent une forme pyramidale asymétrique et en ce que les pointes (108) des dents de prise sont disposées de façon décalée les unes derrière les autres, en rangées de dents, l'angle $\delta$ défini sur la figure 2 étant d'à peu près 20°.

5. Dispositif de serrage selon l'une des revendications 1 à 4, caractérisé en ce que les dents de prise (74) sont formées en adaptation à la composition de la structure de la bande (20) de la ceinture de sécurité, de telle façon que l'espacement entre les rangées de dents correspond à l'espacement entre les fils de trame dans le tissage de la bande de ceinture.

# FIG.1

FIG.3

FIG.4

FIG.2

# FIG.5

# FIG.6

# FIG.7

# FIG.8

FIG.9

FIG.10